# EUROPEAN PATENT SPECIFICATION

(11) **EP 2 960 094 B1**
(45) Date of publication and mention of the grant of the patent: **15.09.2021**
(21) Application number: 14174112.4
(22) Date of filing: 26.06.2014
(51) Int. Cl.: B60K 17/28, B28C 5/42

(54) **Torque transmission device for trucks having demountable or interchangeable bodies**
Drehmomentübertragungsvorrichtung für Lastkraftwagen mit abnehmbarem oder auswechselbaren Aufbauten
Dispositif de transmission de couple pour camions possédant des corps interchangeables ou démontables

(43) Date of publication of application: 30.12.2015
(73) Proprietor: Pris-Mag S.r.l., 20871 Vimercate (MB) (IT)
(72) Inventor: Sala, Alessandro, 20871 VIMERCATE MB (IT); Sala, Paolo, 20871 VIMERCATE MB (IT)
(74) Representative: Mittler, Enrico

(56) References cited:
- EP-A1- 0 490 365
- EP-A1- 1 916 147
- DE-A1- 4 314 218
- None

## Description

The present invention relates to a torque transmission device for trucks having demountable or interchangeable bodies, in particular to an automatic coupling device.

In the aforesaid technical field, "bodyworks" or bodies" or "superstructures" are structures attached to the chassis of a truck to be specialized for a particular type of transport or handling on site.

Examples of trucks with different units may be: fixed bodies, dumper bodies, cranes, concrete mixers, diggers, drainage tanks and others. The aforesaid bodies may be fixed to the vehicle either permanently so as to limit it to a single use or temporarily for transporting them and for some particular purposes, and then the bodies can be removed leaving the vehicle ready for a different use.

A truck built to carry demountable bodies can obviously offer a more versatile service than one which is not; furthermore, said truck is more versatile if the units are also interchangeable. The fact of making a truck suited to carry such interchangeable bodies results in the addition of hydraulic devices to the chassis of the truck with which the body is maneuvered, means for locking the body onto the chassis and means for releasing the body from the chassis; the means may be of different type, such as hydraulic, pneumatic or electric type.

The use of torque transmission devices for trucks with demountable or interchangeable bodies is known, where a male member of the device is allocated aboard the truck and the female member is arranged aboard the body, or vice versa. The male member is usually connected to the power take-off of the truck and allows the transmission of the rotary motion to the female member aboard the body, or vice versa, as long as the parts can be coupled to each other.

EP 0490365 describes a truck with interchangeable concrete mixer, provided with a device for transmitting torque from the truck to the interchangeable body with automatic coupling/releasing means. The device particularly controls the hydraulic pump of a concrete mixer adapted to control the rotation of the mixing drum of a concrete mixer.

The power take-off shaft is connected to the hydraulic pump by means of a transmission system comprising a transmission shaft with two Cardan joints, one of which is connected to the power take-off of the truck and the other is connected to a rotary motion transmission device and to a rotary motion reception device arranged on the concrete mixer. The Cardan shaft is inclined with respect to the resting plane of the truck and the rotary motion transmission and reception devices also have a rotation axis which is not parallel to the resting plane of the truck for the interchangeable body.

Said apparatus however has some drawbacks. The transmission system cannot ensure a correct operation when the truck on which the concrete mixer is installed must operate under difficult operating conditions, such as on rough terrain or on slopes.

Vibrations and oscillations may occur during the operation of the transmission system, which may damage the aforesaid system.

Furthermore, the forces which are released during the coupling of the transmission member with the reception member may damage both members.

EP 1916147 discloses an automatic coupling/uncoupling system for torque transmission units in trucks having demountable bodies. The system comprises torque transmission means aboard the truck and torque reception means aboard the body. Each one of the torque reception and transmission means comprises a coupling member to transmit a rotary motion from the truck to the body and supporting means for the coupling member.

In view of the described prior art, it is the object of the present invention to provide a torque transmission device for trucks having demountable or interchangeable bodies, in particular an automatic coupling device, which solves the problems set forth above.

According to the present invention, such an object is achieved by a torque transmission device for trucks with demountable or interchangeable bodies as defined in claim 1. The features and advantages of the present invention will become apparent from the following detailed description of a practical embodiment thereof, shown by way of non-limitative example in the accompanying drawings, in which:
figure 1 is a diagrammatic view of the torque transmission device for trucks having demountable or interchangeable bodies according to the present invention;
figure 2 is a side view of a truck provided with a part of the torque transmission device for trucks having demountable or interchangeable bodies according to the present invention;
figure 2A is a perspective view of a part of the truck in figure 2;
figure 3 is a view of a part of the demountable or interchangeable body provided with the other part of the torque transmission device for trucks having demountable or interchangeable bodies according to the present invention;
figures 4-6 are exploded views of the parts of the torque transmission device in figure 3;
figure 7 is a front view of a part of the torque transmission device in figure 4;
figure 8 shows a translation device adapted to allow the automatic coupling of the two parts of the torque transmission device in figure 1.

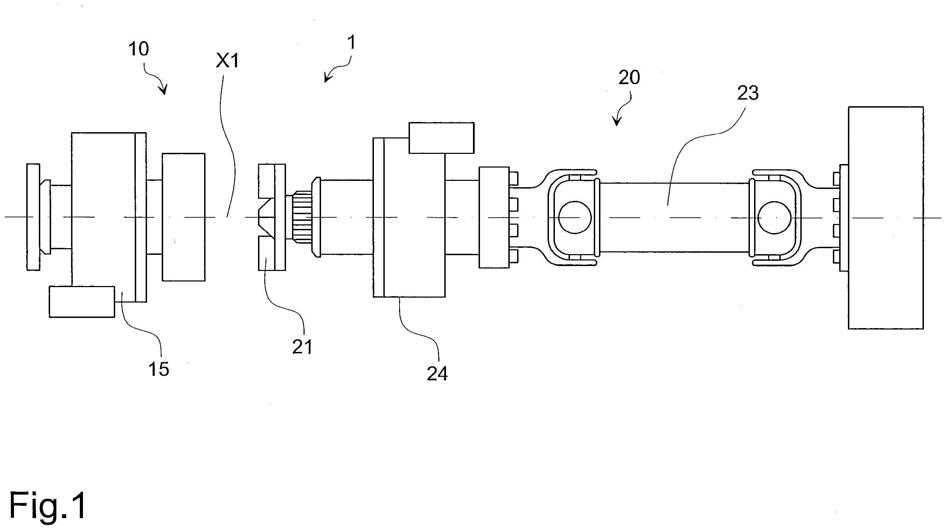

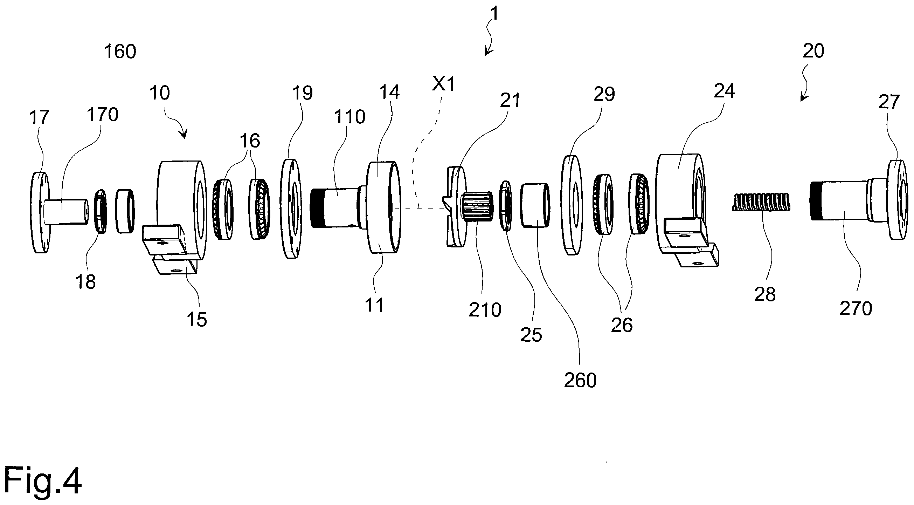

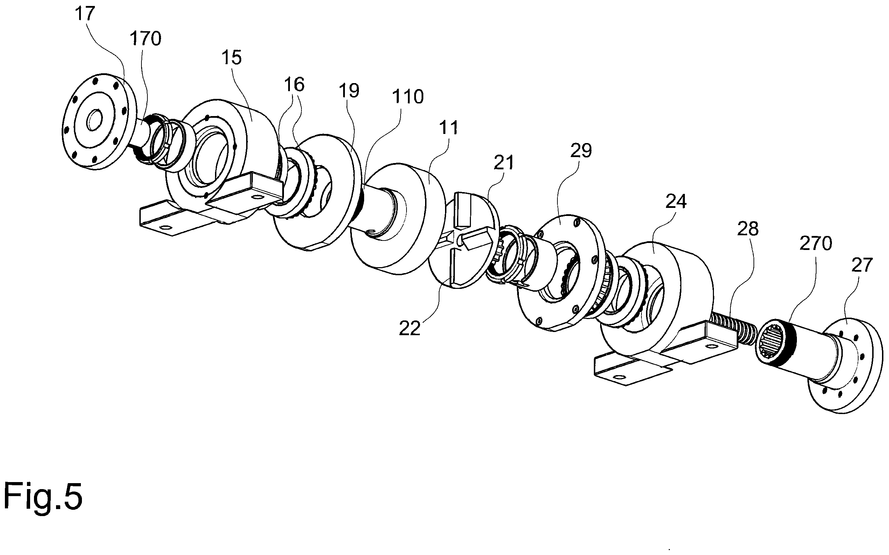

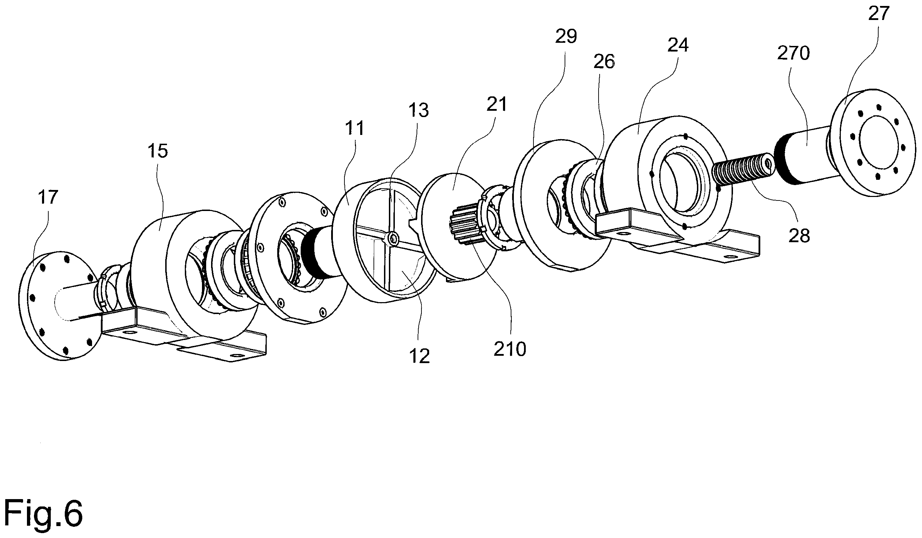

Figures 1-8 show a torque transmission device 1 for trucks with demountable or interchangeable bodies, in particular an automatically coupling device, according to the present invention. Device 1 comprises a device 10 adapted to transmit a rotary motion to a device 20 adapted to receive the rotary motion of device 10.

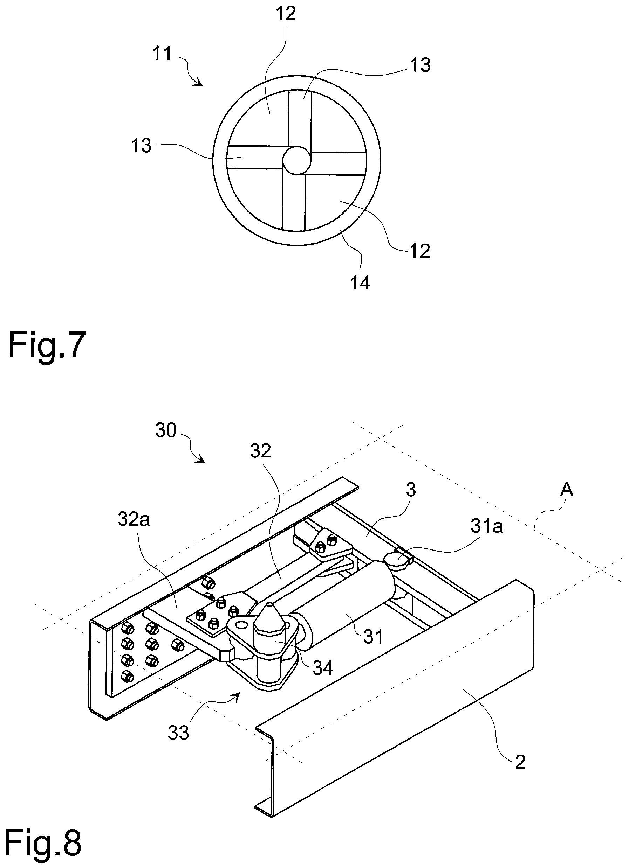

Means 30 are preferably provided aboard truck 5, being adapted to allow the automatic coupling of the two devices 10, 20; so the manual mechanical intervention of an operator is not needed. Truck 5 is provided with a chassis 2 which develops along the longitudinal axis X, and in particular the coupling means 30 for the devices 10 and 20 are means adapted to allow the translation of the demountable or interchangeable body 40 along the longitudinal axis X; said means 30, normally arranged in the chassis 2 of truck 5, may be represented by the translation device 30 described in figure 8. The means 30 comprise a hydraulic jack 31 for activating the translation device which is hinged by means of a hinge 31a to a crosspiece 3 which is integral with the chassis 2 of truck 5. The means 30 comprise a triangular cam 33, at a first vertex of which an end of the piston of the hydraulic jack 31 is hinged. A second vertex of cam 33 is hinged onto a transversal arm 32a, to which an end of a lateral reinforcing support 32 is also connected, the other end of said support being constrained to the crosspiece 3; a conical pin 34, which is free to rotate, is fixed to the third vertex of cam 33. As known, the conical pin engages two crosspieces of body 40 when the body is lowered on chassis 2 and the hydraulic jack 31 translates the body 40 on chassis 2 along the axis X to couple the devices 10 and 20, and preferably also to anchor body 40 onto truck 5.

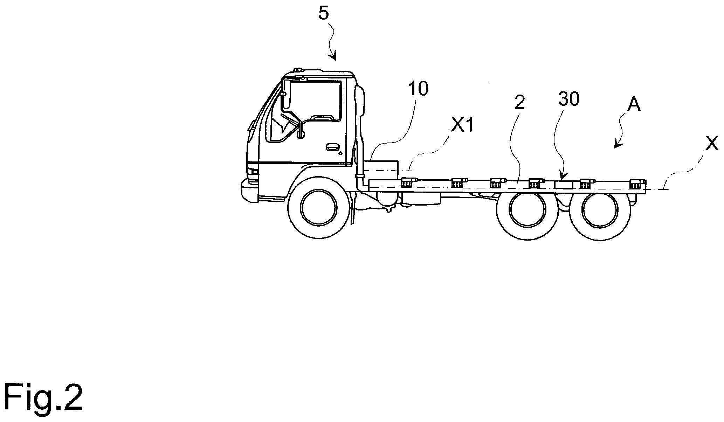

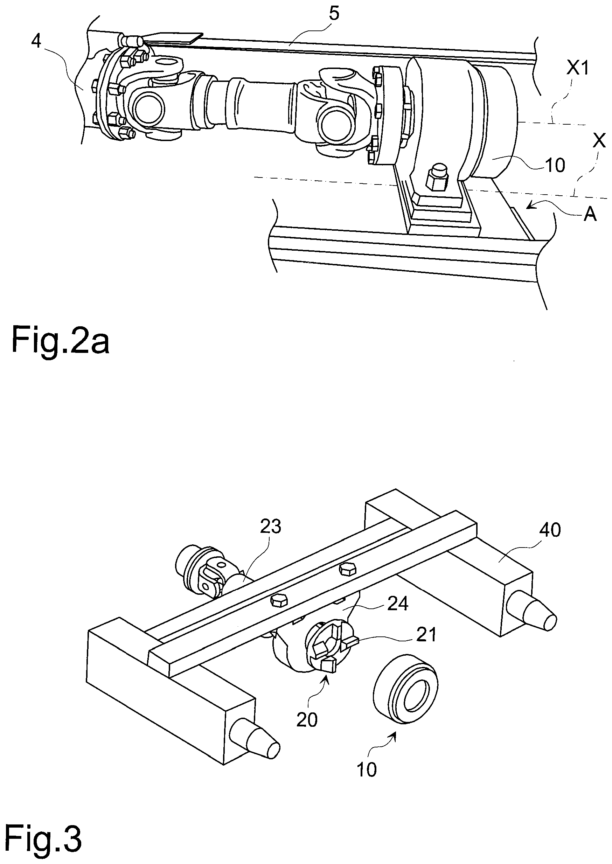

Truck 5 is provided with a power take-off shaft 4 having a rotation axis preferably parallel to the support plane A of the body (Figure 2); the support plane A is defined by the chassis 2 of truck 5. The power take-off preferably depends on the engine of the truck and may be actuated when the vehicle is either stationary or traveling.

The device 10, which has a coupling member 11 provided with cavities 12 delimited by segments 13 arranged circumferentially about the rotation axis X1 (figures 2 and 4-7), is connected to the power take-off shaft of the truck; device 10 preferably comprises four cavities 12 delimited by four segments 13 and by an annular protrusion 14 which surrounds the segments 13 and the cavities 12. Moreover, the annular protrusion 14 facilitates the coupling with the device 20, especially when the two devices are not well aligned. The rotation axis X1 is parallel to the support plane A of body 40 and is parallel to the translation axis X.

The device 10 is fixed to the truck by means of a ring-shaped supporting bracket 15. The coupling member 11 comprises a hollow tubular protrusion 110 which may be coupled to another member 17 having a tubular protrusion 170 and connected to the power take-off 4 of the truck; the member 17 is adapted to transmit the rotary motion to the coupling member 11.

The device 20 comprises a coupling member 21 provided with protrusions 22, preferably of the saw-tooth type and made of a very hard material, for example a thermally treated material, such as 39 NiCrMo4 or the like or with similar or better features. The protrusions 22 are adapted to engage the cavities 12 of device 10 to allow the rotary motion to be transmitted to a user of the body 40, preferably by means of a Cardan shaft 23 (Figures 3-6); the device 20 is fixed to body 40 by means of a ring-shaped supporting bracket 24. The coupling members 11 and 21, with the presence of the protrusions 22 which can be inserted into the cavities 12 and of the annular protrusion 14 in which the coupling member 21 can be inserted, are of the automatic coupling type, i.e. are structured to allow their automatic coupling.

The coupling member 21 comprises a longitudinally grooved shaft 210 which may be coupled to another member 27 having a tubular grooved cavity 270 configured to be coupled to the shaft 210. Member 27 is connected to the user of the body; member 27 is adapted to transmit the rotary motion to the user of the body. The device 20 comprises at least one bearing 26, but preferably two bearings 26, of the ring-shaped type and normally kept within the annular bracket 24 by means of a member 29; the bearings 26 are arranged about the outer part of the tubular cavity 270. In particular, the bearings are arranged about a sleeve 260, slidingly fitted in turn on the outer part of the tubular cavity 270. A spring 28 arranged within the tubular cavity 270 is also present; the spring 28 allows the translation of the coupling member 21 along the axis X1 to allow a correct, reliable coupling between the members 11, 21, thus ensuring a correct transmission of the mechanical power throughout the operation. Spring 28 has the function of always ensuring the correct coupling pressure, by relieving the reaction forces which are developed due to its compression caused by the coupling of the two members 11 on the bearings. The free end of the outer part of the tubular cavity 270 is threaded to be coupled to an annular member 25.

The bearings 26 are adapted to absorb the forces which are developed during the operation of coupling the members 11 and 21. When coupling the members 11 and 21, member 21 translates along the axis X1 towards member 11; member 21 is carried preferably by the means 30 to obtain the automatic coupling of the members 11 and 21.

When coupling member 11 to member 21, the bearings 26, kept within the annular bracket 24, are adapted to absorb the forces which are developed during the coupling operation; thereby, shocks to the user of body 40 which could even cause a failure of the user are avoided. When coupling the members 11 and 21, member 21 translates along the axis X1 towards body 40 and may knock against the member 25 screwed onto the outer part of the tubular cavity 270 of member 27; the impact is absorbed within the annular bracket 24 by the bearings 26 without damaging member 27 and/or the user connected to member 27.

Preferably, device 10 also comprises at least one bearing 16, but preferably two bearings 16, normally kept within the annular bracket 15 by means of a member 19. In particular, the bearings are arranged about a sleeve 160, slidingly fitted in turn on the outer part of the hollow tubular protrusion 110; the latter has a threaded free end to be coupled to an annular member.

When coupling the members 11 and 21, member 21 rapidly translates along the axis X1 towards the cab of the truck; the impact of the members 11 and 21 caused by said translation is also absorbed within the annular bracket 15 of the bearings 16 without causing the impact of member 11 with bracket 15 and/or damaging member 17 and/or the power take-off connected to member 17.

The bearings 16 provide a better absorption of the forces which are developed during the operation of coupling the members 11 and 21.

## Claims

1. A torque transmission device mountable on a truck with demountable or interchangeable body (40), said device comprising torque transmission means (10) aboard the truck (5) and torque reception means (20) aboard the body, said torque reception and transmission means each comprising a coupling member (11, 21) to transmit a rotary motion from the truck to the body, said transmission means and said reception means each comprising supporting means (15, 24) for the coupling member (21), said supporting means for the coupling member of said reception means being provided with at least one bearing (26) and with an annular supporting bracket (24), whereby said supporting means for the coupling member of said transmission means are provided with at least one bearing (16) and said reception means comprise at least one bearings (26) arranged inside the annular supporting bracket (24), **characterized in that** said coupling member (21) of the reception means comprises a longitudinally grooved shaft (210) adapted to be coupled to another member (27) configured to transmit the rotary motion to the user of the body, said another member (27) having a tubular grooved cavity (270) configured to be coupled to the shaft (210), said at least one bearing being arranged about a sleeve (260), slidingly fitted in turn on the outer part of a grooved tubular cavity (270)

2. A device according to claim 1, **characterized in that** the coupling members (11, 21) of said transmission and reception means are arranged so that the rotary motion transmitted by the truck and received by the body occurs about a rotation axis (X1) which is parallel to the support plane (A) of the truck on which the body is arranged.

3. A device according to claim 1, **characterized in that** the coupling members (11, 21) of said transmission and reception means are of the automatic coupling type.

4. A device according to claim 1, **characterized in that** said reception means comprise elastic means (28) adapted to allow the translation of the coupling member (21) of the reception means along a rotation axis (X1) which is parallel to the support plane (A) of the truck on which the body is arranged to allow a correct coupling between the coupling members (11, 21) of said transmission and reception means.

5. A truck with a demountable or interchangeable body (4) comprising means (20) suitable for receiving a rotary motion, which may be coupled to means (10) suitable for transmitting the rotary motion of a truck (5), said reception means comprising a coupling member (21) with the transmission means, said coupling member comprising supporting means, said supporting means (24) of the coupling member are provided with at least one bearing (26)and with an annular supporting bracket (24), said transmission means of the truck comprising a coupling member (11) including supporting means, whereby said supporting means (15) of the coupling member of the truck are provided with at least one bearing (16) and said reception means comprise at least one bearing (26) arranged inside the annular supporting bracket (24), **characterized in that** said coupling member (21) of the reception means comprising a longitudinally grooved shaft (210) adapted to be coupled to another member (27) configured to transmit the rotary motion to the user of the body, said another member (27) having a tubular grooved cavity (270) configured to be coupled to the shaft (210), said at least one bearing being arranged about a sleeve (260), slidingly fitted in turn on the outer part of a grooved tubular cavity (270).

6. A truck according to claim 5, **characterized in that** the coupling member (21) of said reception means is arranged so that the rotary motion is received about a rotation axis (X1) parallel to the support plane (A) of the truck on which the body is arranged.

7. A truck according to claim 5, **characterized in that** the coupling members (11, 21) of said transmission and reception means are of the automatic coupling type.

8. A truck according to claim 5, **characterized in that** said reception means comprise elastic means (28) adapted to allow the translation of the coupling member (21) of the reception means along a rotation axis (X1) which is parallel to the support plane (A) of the truck on which the body is arranged to allow a correct coupling between the coupling members (11, 21) of said transmission and reception means.

9. A truck according to claim 5, **characterized in that** the chassis (2) of the truck develops along a longitudinal axis (X) and defines a resting plane (A) for the body and the coupling member (11) of said transmission means is arranged so that the rotary motion is transmitted about a rotation axis (X1) parallel to the support plane (A) of the truck on which the body is arranged.

10. A truck according to claim 9, **characterized in that** the coupling members (11, 21) of said transmission and reception means are of the automatic coupling type, said truck comprising means (30) adapted to automatically couple the means (10) for transmitting the rotary motion to the means (20) for receiving the rotary motion of a demountable or interchangeable body.

11. A truck according to claim 10, **characterized in that** the chassis (2) of the truck develops along a longitudinal axis (X) and defines a resting plane (A) for the body, and **in that** said means (30) for automatically coupling the means (10) for transmitting the rotary motion to the means (20) for receiving the rotary motion of a demountable or interchangeable body comprise translation means of the demountable or interchangeable body along a longitudinal axis (X) which is parallel to the support plane (A) of the demountable or interchangeable body.

## Patentansprüche

1. Drehmomentübertragungsvorrichtung, die an einem Lastkraftwagen mit abnehmbarem oder austauschbarem Aufbau (40) montierbar ist, wobei die Vorrichtung Drehmomentübertragungseinrichtungen (10) an Bord des Lastkraftwagens (5) und Drehmomentempfangseinrichtungen (20) an Bord des Aufbaus umfasst, wobei die Drehmomentempfangs- und Drehmomentübertragungseinrichtungen jeweils aufweisen: ein Kopplungselement (11, 21) zum Übertragen einer Drehbewegung von dem Lastkraftwagen zu dem Aufbau, wobei die Übertragungseinrichtungen und die Empfangseinrichtungen jeweils Halterungseinrichtungen (15, 24) für das Kopplungselement (21) umfassen, wobei die Halterungseinrichtungen für das Kopplungselement der Empfangseinrichtungen mit mindestens einem Lager (26) und mit einem ringförmigen Stützhalter (24) versehen sind,
wobei die Halterungseinrichtungen für das Kopplungselement der Übertragungseinrichtungen mit mindestens einem Lager (16) versehen sind und die Empfangseinrichtungen mindestens ein Lager (26) aufweisen, das im Inneren des ringförmigen Stützhalters (24) angeordnet ist,
**dadurch gekennzeichnet, dass** das Kopplungselement (21) der Empfangseinrichtungen eine in Längsrichtung mit Nuten versehene Welle (210) aufweist, die zur Kopplung mit einem weiteren Element (27) ausgebildet ist, das zum Übertragen der Drehbewegung zu dem Abnehmer des Aufbaus ausgebildet ist, wobei das weitere Element (27) einen rohrförmigen, mit Nuten versehenen Hohlraum (270) aufweist, der zur Kopplung mit der Welle (210) ausgebildet ist, wobei das mindestens eine Lager um eine Hülse (260) herum angeordnet ist, die wiederum verschiebbar auf den äußeren Teil eines mit Nuten versehenen ringförmigen Hohlraums (270) gepasst ist.

2. Vorrichtung nach Anspruch 1,
**dadurch gekennzeichnet, dass** die Kopplungselemente (11, 21) der Übertragungs- und Empfangseinrichtungen derart angeordnet sind, dass die von dem Lastkraftwagen übertragene und von dem Aufbau empfangene Drehbewegung um eine Drehachse (X1) erfolgt, die parallel zu der Abstützebene (A) des Lastkraftwagens ist, auf dem der Aufbau angeordnet ist.

3. Vorrichtung nach Anspruch 1,
**dadurch gekennzeichnet, dass** die Kopplungselemente (11, 21) der Übertragungs- und Empfangseinrichtungen vom automatischen Kopplungs-Typ sind.

4. Vorrichtung nach Anspruch 1,
**dadurch gekennzeichnet, dass** die Empfangseinrichtungen elastische Einrichtungen (28) umfassen, die dazu ausgebildet sind, die Translation des Kopplungselements (21) der Empfangseinrichtungen entlang einer Drehachse (X1) zuzulassen, die parallel zu der Abstützebene (A) des Lastkraftwagens ist, auf dem der Aufbau angeordnet ist, um eine korrekte Kopplung zwischen den Kopplungselementen (11, 21) der Übertragungs- und Empfangseinrichtungen zu ermöglichen.

5. Lastkraftwagen mit einem abnehmbaren oder austauschbaren Aufbau (4) mit Einrichtungen (20), die zum Empfangen einer Drehbewegung geeignet sind und mit Einrichtungen (10) gekoppelt werden können, die zum Übertragen der Drehbewegung eines Lastkraftwagens (5) geeignet sind, wobei die Empfangseinrichtungen ein Kopplungselement (21) mit den Übertragungseinrichtungen aufweisen, wobei das Kopplungselement Halterungseinrichtungen aufweist, wobei die Halterungseinrichtungen (24) des Kopplungselements mit mindestens einem Lager (26) und mit einem ringförmigen Stützhalter (24) versehen sind, wobei die Übertragungseinrichtungen des Lastkraftwagens ein Kopplungselement (11) mit Halterungseinrichtungen aufweisen, wobei die Halterungseinrichtungen (15) des Kopplungselements des Lastkraftwagens mit mindestens einem Lager (16) versehen sind und die Empfangseinrichtungen mindestens ein Lager (26) aufweisen, das im Inneren des ringförmigen Stützhalters (24) angeordnet ist,
**dadurch gekennzeichnet, dass** das Kopplungselement (21) der Empfangseinrichtungen eine in Längsrichtung mit Nuten versehene Welle (210) aufweist, die zur Kopplung mit einem weiteren Element (27) ausgebildet ist, das zum Übertragen der Drehbewegung zu dem Abnehmer des Aufbaus ausgebildet ist, wobei das weitere Element (27) einen rohrförmigen, mit Nuten versehenen Hohlraum (270) aufweist, der zur Kopplung mit der Welle (210) ausgebildet ist, wobei das mindestens eine Lager um eine Hülse (260) herum angeordnet ist, die wiederum verschiebbar auf den äußeren Teil eines mit Nuten versehenen ringförmigen Hohlraums (270) gepasst ist.

6. Lastkraftwagen nach Anspruch 5,
**dadurch gekennzeichnet, dass** das Kopplungselement (21) der Empfangseinrichtungen derart angeordnet ist, dass die Drehbewegung um eine Drehachse (X1) aufgenommen wird, die parallel zu der Abstützebene (A) des Lastkraftwagens ist, auf dem der Aufbau angeordnet ist.

7. Lastkraftwagen nach Anspruch 5,
**dadurch gekennzeichnet, dass** die Kopplungselemente (11, 21) der Übertragungs- und Empfangseinrichtungen vom automatischen Kopplungs-Typ sind.

8. Lastkraftwagen nach Anspruch 5,
**dadurch gekennzeichnet, dass** die Empfangseinrichtungen elastische Einrichtungen (28) umfassen, die dazu ausgebildet sind, die Translation des Kopplungselements (21) der Empfangseinrichtungen entlang einer Drehachse (X1) zuzulassen, die parallel zu der Abstützebene (A) des Lastkraftwagens ist, auf dem der Aufbau angeordnet ist, um eine korrekte Kopplung zwischen den Kopplungselementen (11, 21) der Übertragungs- und Empfangseinrichtungen zu ermöglichen.

9. Lastkraftwagen nach Anspruch 5,
**dadurch gekennzeichnet, dass** sich das Fahrgestell (2) des Lastkraftwagens entlang einer Längsachse (X) erstreckt und eine Auflageebene (A) für den Aufbau bildet und das Kopplungselement (11) der Übertragungseinrichtungen derart angeordnet ist, dass die Drehbewegung um eine Drehachse (X1) parallel zu der Abstützebene (A) des Lastkraftwagens übertragen wird, auf der der Aufbau angeordnet ist.

10. Lastkraftwagen nach Anspruch 9,
**dadurch gekennzeichnet, dass** die Kopplungselemente (11, 21) der Übertragungs- und Empfangseinrichtungen vom automatischen Kopplungs-Typ sind, wobei der Lastkraftwagen Einrichtungen (30) aufweist, die dazu ausgebildet sind, die Einrichtungen (10) zum Übertragen der Drehbewegung mit den Einrichtungen (20) zum Empfangen der Drehbewegung eines abnehmbaren oder austauschbaren Körpers zu koppeln.

11. Lastkraftwagen nach Anspruch 10,
**dadurch gekennzeichnet, dass** sich das Fahrgestell (2) des Lastkraftwagens entlang einer Längsachse (X) erstreckt und eine Auflageebene (A) für den Aufbau bildet, und dass die Einrichtungen (30) zum automatischen Koppeln der Einrichtungen (10) zum Übertragen der Drehbewegung mit den Einrichtungen (20) zum Aufnehmen der Drehbewegung eines abnehmbaren oder austauschbaren Aufbaus Translationseinrichtungen des abnehmbaren oder austauschbaren Aufbaus entlang einer Längsachse (X) aufweisen, die parallel zu der Abstützebene (A) des abnehmbaren oder austauschbaren Aufbaus ist.

## Revendications

1. Dispositif de transmission de couple pouvant être monté sur un camion avec un corps démontable ou interchangeable (40), ledit dispositif comprenant des moyens de transmission de couple (10) à bord du camion (5) et des moyens de réception de couple (20) à bord du corps, lesdits moyens de réception et de transmission de couple comprenant chacun un élément de couplage (11, 21) pour transmettre un mouvement de rotation du camion au corps, lesdits moyens de transmission et lesdits moyens de réception comprenant un chacun des moyens de support (15, 24) pour l'élément de couplage (21), lesdits moyens de support pour l'élément de couplage desdits moyens de réception étant prévus avec au moins un palier (26) et avec une console de support annulaire (24), moyennant quoi lesdits moyens de support pour l'élément de couplage desdits moyens de transmission sont prévus avec au moins un palier (16) et lesdits moyens de réception comprennent au moins un palier (26) agencé à l'intérieur de la console de support annulaire (24), **caractérisé en ce que** :
ledit élément de couplage (21) des moyens de réception comprend un arbre longitudinalement rainuré (210) adapté pour être couplé à un autre élément (27) configuré pour transmettre le mouvement de rotation à l'utilisateur dudit corps, ledit autre élément (27) ayant une cavité rainurée tubulaire (270) configurée pour être couplée à l'arbre (210), ledit au moins un palier étant agencé autour d'un manchon (260), monté de manière coulissante à son tour sur la partie externe d'une cavité tubulaire rainurée (270).

2. Dispositif selon la revendication 1, **caractérisé en ce que** les éléments de couplage (11, 21) desdits moyens de transmission et de réception sont agencés de sorte que le mouvement de rotation transmis par le camion et reçu par le corps a lieu autour d'un axe de rotation (X1) qui est parallèle au plan de support (A) du camion sur lequel le corps est agencé.

3. Dispositif selon la revendication 1, **caractérisé en ce que** les éléments de couplage (11, 21) desdits moyens de transmission et de réception sont du type à couplage automatique.

4. Dispositif selon la revendication 1, **caractérisé en ce que** les moyens de réception comprennent des moyens élastiques (28) adaptés pour permettre la translation de l'élément de couplage (21) des moyens de réception le long d'un axe de rotation (X1) qui est parallèle au plan de support (A) du camion sur lequel le corps est agencé pour permettre un couplage correct entre les éléments de couplage (11, 21) desdits moyens de transmission et de réception.

5. Camion avec un corps démontable ou interchangeable (4) comprenant des moyens (20) appropriés pour recevoir un mouvement de rotation, qui peuvent être couplés aux moyens (10) appropriés pour transmettre le mouvement de rotation d'un camion (5), lesdits moyens de réception comprenant un élément de couplage (21) avec les moyens de transmission, ledit élément de couplage comprenant des moyens de support, lesdits moyens de support (24) de l'élément de couplage sont prévus avec au moins un palier (26) et avec une console de support annulaire (24), lesdits moyens de transmission du camion comprenant un élément de couplage (11) comprenant des moyens de support, moyennant quoi lesdits moyens de support (15) de l'élément de couplage du camion sont prévus avec au moins un palier (16) et lesdits moyens de réception comprennent au moins un palier (26) agencé à l'intérieur de la console de support annulaire (24), **caractérisé en ce que** :
ledit élément de couplage (21) des moyens de réception comprenant un arbre longitudinalement rainuré (210) adapté pour être couplé à un autre élément (27) configuré pour transmettre le mouvement de rotation à l'utilisateur du corps, ledit autre élément (27) ayant une cavité tubulaire rainurée (270) configurée pour être couplée à l'arbre (210), ledit au moins un palier étant agencé autour d'un manchon (260), monté de manière coulissante à son tour sur la partie externe d'une cavité tubulaire rainurée (270).

6. Camion selon la revendication 5, **caractérisé en ce que** l'élément de couplage (21) desdits moyens de réception est agencé de sorte que le mouvement de rotation est reçu autour d'un axe de rotation (X1) parallèle au plan de support (A) du camion sur lequel le corps est agencé.

7. Camion selon la revendication 5, **caractérisé en ce que** les éléments de couplage (11, 21) desdits moyens de transmission et de réception sont du type à couplage automatique.

8. Camion selon la revendication 5, **caractérisé en ce que** lesdits moyens de réception comprennent des moyens élastiques (28) adaptés pour permettre la translation de l'élément de couplage (21) des moyens de réception le long d'un axe de rotation (X1) qui est parallèle au plan de support (A) du camion sur lequel le corps est agencé pour permettre un couplage correct entre les éléments de couplage (11, 21) desdits moyens de transmission et de réception.

9. Camion selon la revendication 5, **caractérisé en ce que** le châssis (2) du camion se développe le long d'un axe longitudinal (X) et définit un plan de repos (A) pour le corps et l'élément de couplage (11) desdits moyens de transmission est agencé de sorte que le mouvement de rotation est transmis autour d'un axe de rotation (X1) parallèle au plan de support (A) du camion sur lequel le corps est agencé.

10. Camion selon la revendication 9, **caractérisé en ce que** les éléments de couplage (11, 21) desdits moyens de transmission et de réception sont du type à couplage automatique, ledit camion comprenant des moyens (30) adaptés pour coupler automatiquement les moyens (10) pour transmettre le mouvement de rotation aux moyens (20) pour recevoir le mouvement de rotation d'un corps démontable ou interchangeable.

11. Camion selon la revendication 10, **caractérisé en ce que** le châssis (2) du camion se développe le long d'un axe longitudinal (X) et définit un plan de repos (A) pour le corps, et **en ce que** lesdits moyens (30) pour le couplage automatique des moyens (10) pour transmettre le mouvement de rotation aux moyens (20) pour recevoir le mouvement de rotation d'un corps démontable ou interchangeable comprennent des moyens de translation du corps démontable ou interchangeable le long d'un axe longitudinal (X) qui est parallèle au plan de support (A) du corps démontable ou interchangeable.
